# EUROPEAN PATENT APPLICATION

(11) **EP 4 234 158 A1**
(43) Date of publication of application: **30.08.2023**
(21) Application number: 22171042.9
(22) Date of filing: 29.04.2022
(51) Int. Cl.: B23K 31/12, B23K 31/00

(54) **SYSTEM AND METHOD FOR ANALYZING WELD QUALITY**

(30) Priority: 25.02.2022 IN 202211010223
(71) Applicant: General Electric Company, Schenectady, NY 12345 (US)
(72) Inventor: KOMMAREDDY, Vamshi, 560066 Bengaluru (IN); KARNATI, Sreekar, Niskayuna, 12309 (US); GORAVAR, Shivappa, 560066 Bengaluru (IN); GALLIERS, Brian, Cincinnati, 45215 (US); THYSSEN, Jeffrey, Vermont, 05759 (US)
(74) Representative: Openshaw & Co.

(57) **Abstract**

Systems and methods are provided herein useful to analyzing weld quality. In some embodiments, the systems and methods identify or predict weld characteristics such as surface discontinuities and/or subsurface discontinuities based on surface topology data and/or welding process parameters. The systems and methods described herein leverage machine learning algorithms to identify relationships between historic weld characteristics and historic pre-weld surface topology, historic post-weld surface topology, and/or historic welding process parameters. Thus, the systems and methods described herein may identify weld characteristics for a weld based on the relationships and the pre-weld surface topology, post-weld surface topology, and/or welding process parameters for the weld. Further, the systems and methods described herein may also identify weld as conforming or not conforming to one or more weld standards based on the relationships and the pre-weld surface topology, post-weld surface topology, and/or welding process parameters for the weld.

## Description

### TECHNICAL FIELD

This technical field relates generally to the analysis of weld quality and, more specifically, to the detection of characteristics associated with a weld.

### BACKGROUND

Typically, in a welding operation, characteristics of a weld such as various discontinuities are identified via inspection. Such discontinuities may be in the weld itself or in the heat-affected zone (HAZ). Discontinuities may include interruptions in the typical structure of a material, such as a lack of homogeneity in mechanical, metallurgical, or physical characteristics. In some instances, a discontinuity may be a defect, which renders a part or a product unable to meet or conform to applicable standards or specifications. The discontinuities in a weld may be surface discontinuities that are present on an external surface of the weld or subsurface discontinuities that are internal to the weld.

### BRIEF DESCRIPTION OF THE DRAWINGS

Provided herein are methods and systems for analyzing weld quality using surface topology of the weld and/or welding process parameters.
FIG. 1 is a block diagram of a system for analyzing weld quality, in accordance with some embodiments.
FIG. 2A is an image of exemplary three-dimensional post-weld topology data for a weld.
FIG. 2B is an image of an exemplary weld section for a weld.
FIG. 2C is a graph of exemplary statistical weld features associated with a weld.
FIG. 2D is a graph of exemplary weld features associated with a weld.
FIG. 2E is an exemplary histogram associated with a weld.
FIG. 3 is a schematic diagram of modules in the system for analyzing weld quality in FIG. 1.
FIG. 4 is a schematic diagram of modules in the system for analyzing weld quality in FIG. 1.
FIG. 5 is a flow diagram of aspects of a method for analyzing weld quality, in accordance with some embodiments.
FIG. 6 is a flow diagram of aspects of a method for analyzing weld quality, in accordance with some embodiments.
FIG. 7 is a flow diagram of aspects of a method for analyzing weld quality, in accordance with some embodiments.

Elements in the figures are illustrated for simplicity and clarity and have not necessarily been drawn to scale. For example, the dimensions and/or relative positioning of some of the elements in the figures may be exaggerated relative to other elements to aid in understanding various embodiments. Also, common but well-understood elements that are useful or necessary in a commercially feasible embodiment are often not depicted to facilitate a less obstructed view of these various embodiments.

### DETAILED DESCRIPTION

Surface discontinuities of the weld may be visible to an operator such as a welder or inspector through visual inspection of the weld. Visual inspection may detect the presence or absence of discontinuities and is often accompanied by dimensional inspection which identifies the location or position of such a discontinuity and the size or dimensions of such a discontinuity. Subsurface discontinuities, however, may only be visible through volumetric inspection methods, such as ultrasonic and/or x-ray inspection, which are typically performed after visual inspection. Both visual and volumetric inspection methods typically occur after the welding operation is complete. Further, the visual and volumetric inspection methods often involve some degree of subjectivity, for example, in the interpretation of whether inspection results conform to weld quality standards or whether inspection results include non-conforming discontinuities (*i*.*e*., defects).

Provided herein are systems and methods of analyzing weld quality. In particular, the systems and methods of analyzing weld quality may identify or predict weld characteristics associated with a weld. Weld characteristics may include any characteristics associated with a weld such as discontinuities (e.g., surface and/or subsurface discontinuities), an indication as to whether the weld conforms to a weld standard, (e.g., conforming vs. non-conforming), or any mechanical, metallurgical, or physical characteristic of the weld (*e.g.*, weld dimensions, weld shape, weld profile, and/or weld reinforcement). In some approaches, the systems and methods of analyzing weld quality may detect characteristics based on a surface topology of a parent material before welding *(i.e.,* "pre-weld surface topology"), a surface topology of the weld after welding *(i.e.,* "post-weld surface topology"), and/or welding process parameters.

The systems and methods of analyzing weld quality described herein leverage machine learning algorithms to identify relationships between historic weld characteristics and historic pre-weld surface topology data, historic post-weld surface topology data, and/or welding process parameters associated with historic welds. The systems and methods of analyzing weld quality may then identify weld characteristics for a weld based on the relationships and the pre-weld surface topology, post-weld surface topology, and/or welding parameters for the weld being analyzed. Further, the systems and methods described herein may also assign a weld classifier to the weld, for example to label or otherwise classify a weld as conforming or not conforming to one or more weld standards, based on the relationships and the pre-weld surface topology, post-weld surface topology, and/or welding parameters for the weld. In this manner, it is contemplated that visual or volumetric inspection of the welds may be eliminated or otherwise reduced.

It is also contemplated that the systems and methods described herein may be used to identify discontinuities associated with a weld and then grade the severity of the discontinuities versus a specification or standard. In this manner, the systems and methods may label or otherwise classify a weld and/or a discontinuity as conforming or non-conforming to the specification or standard. In some embodiments, the systems and methods may classify a non-conforming discontinuity as a defect.

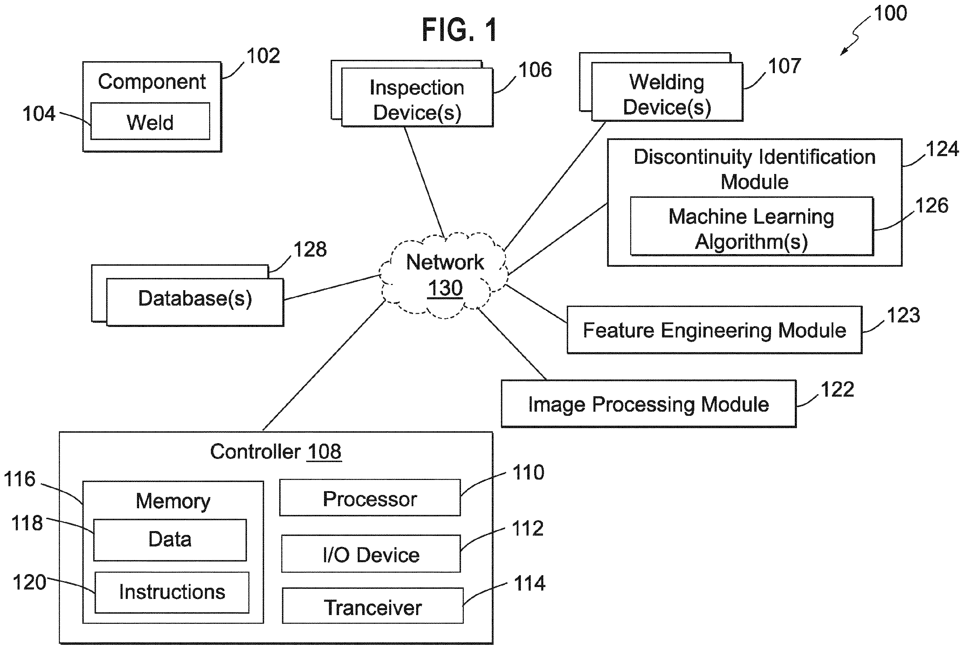

FIG. 1 illustrates a system 100 for analyzing weld quality. It is contemplated that the system 100 may be employed to execute one or more of the methods described herein. The system 100 includes one or more inspection devices 106, one or more welding devices 107, a controller 108, an image processing module 122, a feature engineering module 123, a discontinuity identification module 124, and one or more databases 128. System 100 may be employed to analyze a component 102.

The component 102 may be any part having one or more welds 104. The system 100 may analyze the one or more welds 104 of the component 102 via one or more of the methods described herein. Examples of the component 102 that may be analyzed via the methods described herein include, but are not limited to, gas or liquid containing tubes or pipes, structural or non-structural tubes or pipes, cylinders, cones, sheets, plates, cast parts, additive parts, forged parts, bosses, and pins. It is contemplated that the one or more welds 104 may include any type of weld such as a fillet weld, a groove weld, a surface weld, a plug weld, a slot weld, a flash weld, a seam weld, a spot weld, and an upset weld. The weld 104 may include a face side and/or a root side. In one non-limiting example, the weld 104 may be a square groove weld that has both a face side and a root side.

In some embodiments, the component 102 be an additively manufactured component having an overlapping seam. Traditional welding techniques may include a single weld bead or seam whereas additively manufacture techniques may generate overlapping systems in which one or more layers of material overlay each other. Accordingly, it is contemplated that the systems and methods described herein may be employed to detect a discontinuity or defect in an overlapping seam or other portion of an additively manufactured component. The overlapping seam, for example, may be generated by additive manufacturing techniques such as direct metal laser melting (DMLM) or direct energy deposition (DED).

The inspection device 106 may be any device configured to generate, output, or receive information on the surface topology of the weld 104 *(i.e.,* surface topology data) and, in some aspects, is any piece of equipment capable of generating point clouds. The inspection device 106 may also generate, output, or receive information on the surface topology of areas of base material adjacent to the weld 104 or other portions of the component 102, for example, in addition to the information on the surface topology of the weld 104 itself. The inspection device 106 may be an imaging device such a laser scanner. In some embodiments, the inspection device 106 is a blue light scanner, however, it is also contemplated that red light scanners, green light scanners, or cameras may be used. Further, a combination of two or more types of inspection devices 106 may be used. The inspection device 106 may be a three-dimensional scanner, a two-dimensional scanner, and/or a one-dimensional scanner. The inspection device 106 may generate or output surface topology data for the weld 104. The output data may be any suitable form of three-dimensional, two-dimensional, or one-dimensional surface topology data. Such output data, for example, may be in the form of point cloud data or image data.

In some approaches, an inspection device 106 is mounted directly or indirectly to the welding device 107. For example, the inspection device 106 may be mounted directly to a welding gun or welding torch, on a secondary bracket that attaches to a mounting surface for the welding gun or the welding torch, or as a separate end effector on a robot. The inspection device 106 may be mounted to the end of a robot and manipulated to scan a weld 104 that is stationary. Additionally, the inspection device 106 may be hard mounted while a robot manipulates the component 102 into a scanning line, area, or volume of the inspection device 106. In other approaches, the inspection device 106 is a handheld device that may be used to obtain topology scans of the weld 104. It is to be understood that, depending on the scenario, the inspection device 106 may inspect the component 102 and/or the weld 104 parallelly or sequentially. Parallel inspection occurs while welding is in-process and involves a trailing device or follower device that trails behind or follows the welding device 107 to inspect the weld 104 while welding is happening. Sequential inspection occurs after welding is complete and involves a scanning device that inspects the weld 104 after welding is finished.

The welding device 107 may be any welding machine useful in any type of welding process such as arc welding, resistance welding, electron beam welding, laser welding, stud welding, orbital welding, or gas welding. In some approaches, the welding device 107 may be an automated welder. The welding device 107 may be configured to collect data on one or more welding process parameters, for example, via one or more probes, meters, and/or sensors coupled to the welding device 107. For example, if the welding device 107 is an automated welder, the welding device 107 may be capable of providing a process parameter log or report or of providing weld job logging functionality. In some aspects, the welding device 107 may include one or more sensors built-in or externally applied to the welding device 107.

The one or more welding process parameters may include any parameter associated with the welding operation. In some approaches, the welding process parameters include one or more of a welding current, a surge in welding current, a welding voltage, a welding amperage, a welding mass read rate, a wire feed speed, a time parameter, a metal consumption quantity or rate, a power consumption quantity or rate, a position on the weld 104, a gas flow rate, a travel speed, an electrode diameter, a base metal temperature, a weld puddle shape, a weld puddle flow dynamic, and a wire size. It is also contemplated that the welding process parameter may be time-series data, for example, including a time history of one or more process parameters over the course of the welding process or a portion thereof. In some approaches, the welding process parameter may be associated with an X-Y-Z position of the weld 104.

The controller 108 may function as a computing device to perform the functions and methods described herein. The controller 108 may include one or more processors 110, input/output (I/O) devices 112, transceivers 114, and memory devices 116. The processors 110 may include any suitable processing device such as a microprocessor, microcontroller, integrated circuit, logic device, or other suitable processing device. The processors 110 may be used to execute or assist in executing the processes, methods, functionality and techniques described herein, and to control various communications, decisions, programs, content, listings, services, interfaces, logging, reporting, etc. Further, the one or more processors 110 may access the memory devices 116, which may store instructions 120, code and the like that are implemented by the processors 110 to implement intended functionality.

The memory devices 116 typically include one or more processor-readable and/or computer-readable media accessed by at least the processors 110 and may include volatile and/or nonvolatile media, such as RAM, ROM, EEPROM, flash memory and/or other memory technology. Further, the memory devices 116 are shown as internal to the controller 108; however, the memory devices 116 may be internal, external or a combination of internal and external memory. Similarly, some or all of the memory devices 116 can be internal, external or a combination of internal and external memory of the processors 110. The memory devices 116 may be substantially any relevant memory such as, but not limited to, solid-state storage devices or drives, hard drive, one or more of universal serial bus (USB) stick or drive, flash memory secure digital (SD) card, other memory cards, and other such memory or combinations of two or more of such memory, and some or all of the memory may be distributed at multiple locations over a computer network. The memory devices 116 may store data 118 such as code, software, executables, scripts, data, content, lists, programming, programs, log or history data, engine information, information on the component 102, and the like. While FIG. 1 illustrates the various elements of the system 100 being coupled together via a bus, it is understood that the various elements may actually be coupled to the controller 108 and/or one or more other elements directly.

Typically, the controller 108 further includes one or more communication interfaces, ports, or transceivers 114 and the like allowing the controller 108 to communicate over a communication bus, a distributed computer, and/or a communication network (e.g., a local area network (LAN), the Internet, wide area network (WAN), etc.) with other devices and/or other such communications or combinations of two or more such communication methods. Further, the transceivers 114 may be configured for wired, wireless, optical, fiber optical cable, satellite, or other such communication configurations or combinations of two or more such communications.

The I/O devices 112 may be any relevant port or combinations of ports, such as but not limited to USB, Ethernet, or other such ports. The I/O devices 112 may be configured to allow wired and/or wireless communication coupling to external devices. For example, the I/O devices 112 may provide wired communication and/or wireless communication (e.g., Wi-Fi, Bluetooth, cellular, RF, and/or other such wireless communication), and in some instances may include any suitable wired and/or wireless interfacing device, circuit and/or connecting device, such as but not limited to one or more transmitters, receivers, transceivers, or combination of two or more of such devices.

The image processing module 122, the feature engineering module 123, and the discontinuity identification module 124 of the system 100 may receive, process, analyze, generate, and/or transmit data. While the image processing module 122, the feature engineering module 123, and the discontinuity identification module 124 are illustrated as separate modules in FIG. 1, the modules do not need to be separate and, in some embodiments, may be implemented by the controller 108.

The image processing module 122 may be configured to process the surface topology data collected by the inspection device 106. The image processing module 122 may generate a weld section for the weld 104 based on the surface topology data, from which one or more weld features may be extracted. The weld section is the area on the face side (or, in some instances, the root side) of the weld 104 that identifies the weld region from adjacent plates of base material *(i.e.,* the area of the weld 104). Thus, the weld section is the area where weld characteristics, such as discontinuities, are potentially present. In some embodiments, the weld section may be in a two-dimensional or X-Y space. The weld section is extracted from point cloud data, such as point cloud data generated by the inspection device 106.

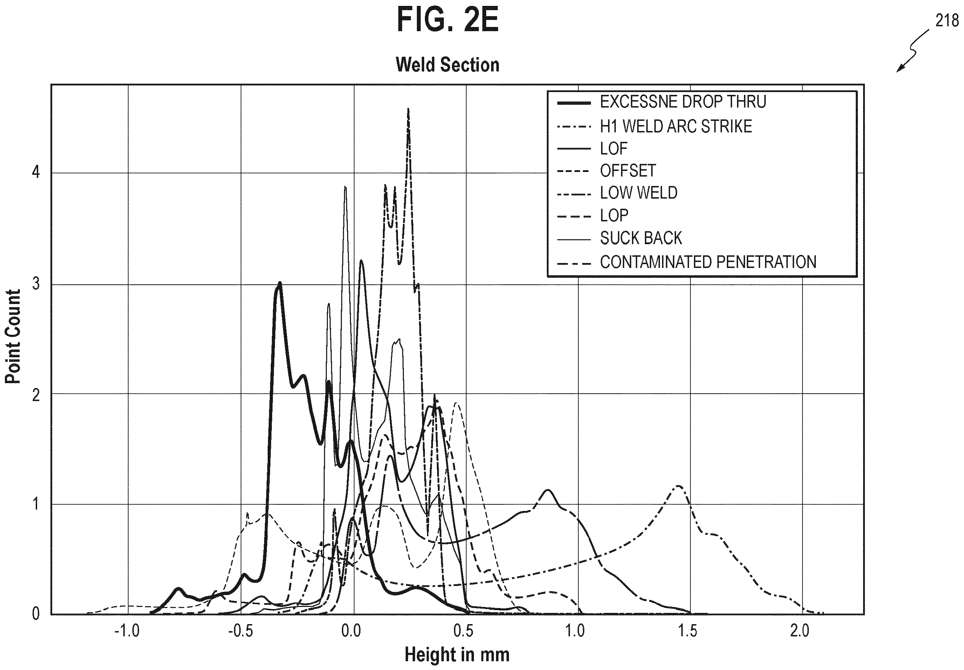

It is contemplated that any image processing techniques may be employed to generate the weld section from point cloud data for the weld 104. The image processing module 122 may obtain an intensity of the surface topology data and extract a weld section based on the intensity of the surface topology data. In some aspects, the image processing module 122 may normalize data from the inspection device 106 to a particular weld type and/or geometry. When the surface topology data is point cloud data in a three-dimensional space, the image processing module 122 may transform the point cloud data to image data which, in some approaches, is image data in a two-dimensional space. Further, the image processing module 122 may structure the two-dimensional data, for example, to scale the two-dimensional data and/or align the two-dimensional data with respect to an X-Y coordinate system. It is also contemplated, that the image processing module 122 may perform thresholding to extract a region of interest, such as the weld section from the two-dimensional data. The image processing module 122 may generate a weld profile or histogram for a weld section, the histogram illustrating bins of height of a weld surface *(i.e.,* X-axis) and a count of points from point cloud data in each bin *(i.e.,* on a Y-axis). A weld profile *(i.e.,* the profile across the weld section) may then be employed to identify characteristics of the weld 104 such as discontinuities. Exemplary histograms are depicted in FIG. 2E.

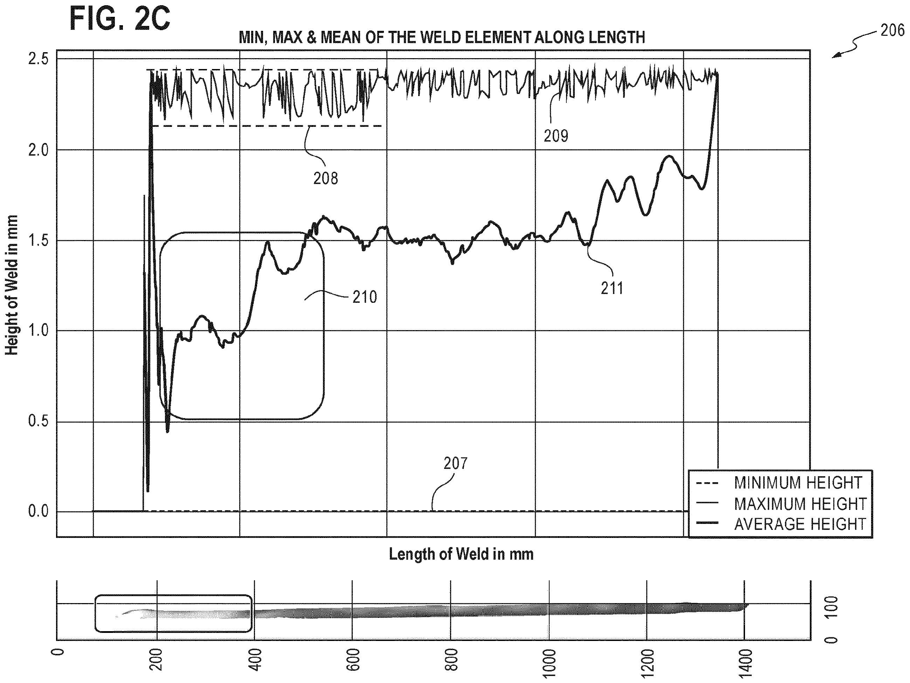

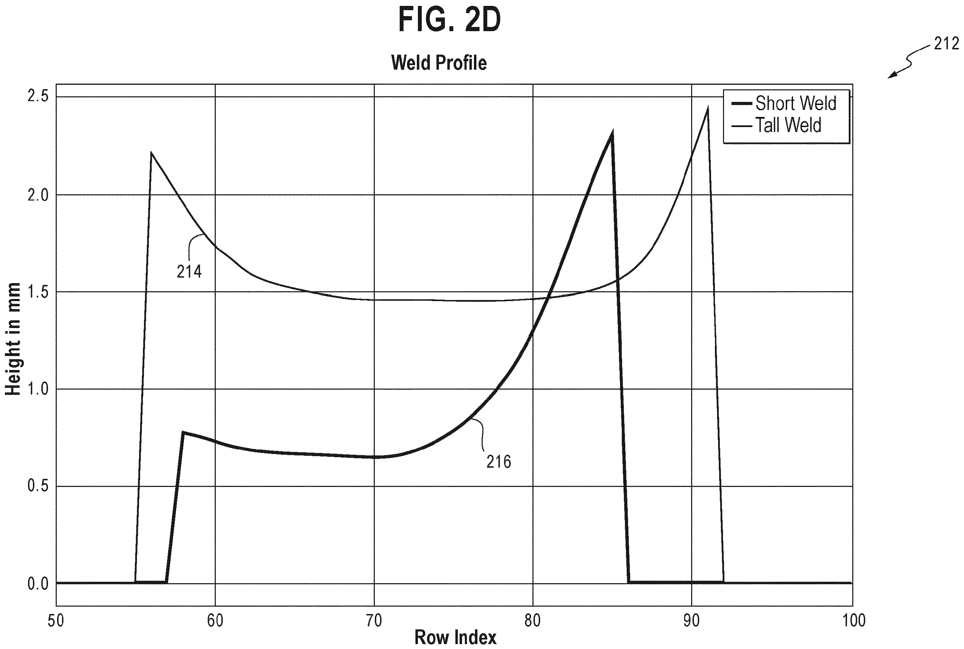

The feature engineering module 123 is configured to identify one or more weld features based on one or more of the surface topology data and the welding process parameters. Weld features may include any feature relating to the topology or structure of the weld 104. Weld features may include one or more of a weld profile, a shape of the weld 104, a dimension of the weld 104 (e.g., maximum height, minimum height, length), a shape of the profile of the weld 104 with respect to adjacent plates of a base material, and a dimension of the cross-section of the weld 104. Weld features may also include any statistical feature, for example, any statistical feature relating to the topology or structural aspects of the weld 104. Such statistical features may include, for example, an average height of the weld 104, a variance in the maximum height of the weld 104, and a variance in the minimum height of the weld 104. Exemplary weld features are depicted in FIGS. 2C and 2D. Further, statistical features may include features extracted from a histogram of weld height *(i.e.,* a histogram showing bins of height of weld surface and a count of points from point cloud data in each bin), such as skewness, kurtosis of the histogram, and area of the histogram. In some approaches, the feature engineering module 123, extracts weld features from the surface topology data and/or from the weld section generated from the surface topology data.

In other approaches, the feature engineering module 123, extracts weld features from the welding process parameters. For example, the weld features extracted from the welding process parameters may include power consumption per unit length of the weld 104, a number of surges, any statistical features of the welding process parameters, or an X-Y-Z position of the weld associated to the time history of the welding process parameters. In some approaches, the weld features extracted from the welding process parameters may also include statistical features or anomalies in a time history log of welding process parameters, such as surges or dips. For example, the weld features extracted may include features from time-series signals of current or a time history log of current, such as mean noise in the current signal, duration of mean noise, etc.

The discontinuity identification module 124 includes one or more machine learning algorithms 126. It is to be understood that any suitable machine learning approaches may be employed by the discontinuity identification module 124. Suitable machine learning approaches may include machine learning based on classification algorithms such as logistic regression, K-nearest neighbor classifiers, support vector classifiers, tree-based classifiers, random forest classifiers, gradient boosting algorithms, neural network-based algorithms, or combinations thereof. In some approaches, the machine learning algorithm 126 is configured to identify one or more weld characteristics based on the weld features. The weld characteristics may include, for example, weld discontinuities (e.g., surface discontinuities, subsurface discontinuities), an indication as to whether the weld 104 conforms to a weld standard, or any mechanical, metallurgical, or physical characteristic of the weld 104. It is to be understood that the discontinuity identification module 124 may identify characteristics, such as discontinuities, associated with the weld 104 itself or associated with the heat affected zone.

Further, the machine learning algorithm 126 of the defect identification module 124 may be configured or trained to predict weld characteristics (such as surface or subsurface defects) for a weld. In particular, the machine learning algorithm 126 may be trained using historic post-weld surface topology data in combination with historic welding process parameters. Accordingly, the defect identification module 124 may identify relationships between historic post-weld surface topology data and/or historic welding process parameters and historic weld characteristics. For example, the defect identification module may develop correlations between historic post-weld surface topology data and/or historic welding process parameters and the historic subsurface defects. In this manner, the machine learning algorithms 126, may be employed to predict when subsurface defects are present based on the post-weld surface topology data and/or welding process parameters associated with a particular weld. Leveraging machine learning algorithms may allow for the prediction of weld characteristics, such as defects, without requiring post-weld volumetric or visual inspection of the weld.

In some embodiments, the discontinuity identification module 124 is trained to identify and/or classify a discontinuity associated with the weld 104 (*e.g*., based the weld features) and to also classify whether the weld 104 is conforming or non-conforming (e.g., whether the weld 104 conforms to one or more weld standards). In some non-limiting examples, the discontinuity identification module 124 may be configured to identify discontinuities such as porosity, slag inclusions, incomplete fusion, incomplete joint penetration, excessive melt-through, balling, cold cracks, hot-cracks, or mismatch or offset with base plates in the welds 104. In one non-limiting example, the discontinuity identification module 124 may be trained to identify whether there is complete or sufficient weld joint penetration for a weld 104 (such as a square groove weld) from the face side of the weld 104. Complete weld penetration indicates that the weld extends completely though the thickness of the base materials while partial weld joint penetration indicates the weld does not extend completely through the base materials. Whether complete or partial weld joint penetration constitutes sufficient weld joint penetration may depend on the particular application of the weld 104 and, for example, may depend on the loading the weld 104 is subjected to. It is contemplated that the discontinuity identification module 124 may be trained to identify or predict whether weld joint penetration is sufficient based on data associated with historic welds. For example, the discontinuity identification module 124 may be trained to identify whether there is sufficient weld joint penetration based on the relationships between the weld features 310 (e.g., weld height of the historic weld) and the inspection data (e.g., whether the historic weld had complete or partial penetration). In another non-limiting example, the discontinuity identification module 124 may be trained to identify whether there is sufficient joint penetration for a weld 104 (such as a lap groove weld) from the face side location and size (e.g., weld-toe to weld-toe) of the weld 104.

In yet another non-limiting example, the discontinuity identification module 124 may identify whether there is sufficient fusion for a weld 104 (such as a beam weld). In a beam weld, a beam may go into the face of the weld 104 and come out the root, forming an hourglass shape. In some approaches, the discontinuity identification module 124 may identify whether there is sufficient fusion at the mid-section or narrowest portion of the weld 104. Incomplete fusion is a weld discontinuity in which fusion does not occur between the weld material and the base material faces or between weld beads. Whether incomplete fusion is sufficient may depend on the particular application of the weld 104 and, for example, may depend on the loading the weld 104 is subjected to. It is contemplated that the discontinuity identification module 124 may be trained to identify or predict whether fusion is sufficient based on data associated with historic welds. For example, the discontinuity identification module 124 may be trained to identify whether there is sufficient fusion based on the relationships between the weld features 310 (e.g., weld height of the historic weld) and the inspection data (e.g., whether the historic weld had incomplete fusion).

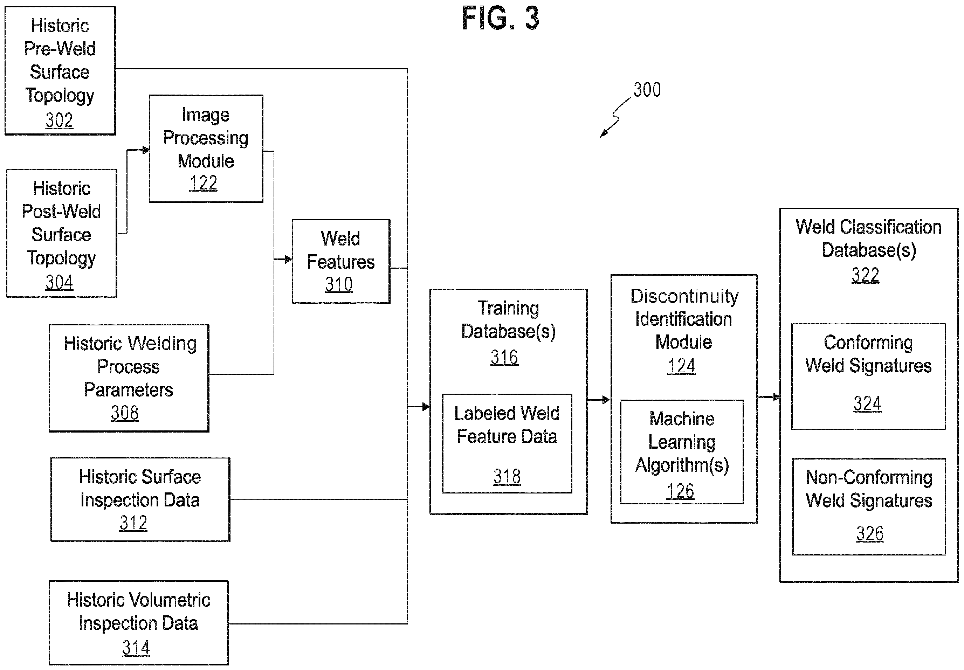

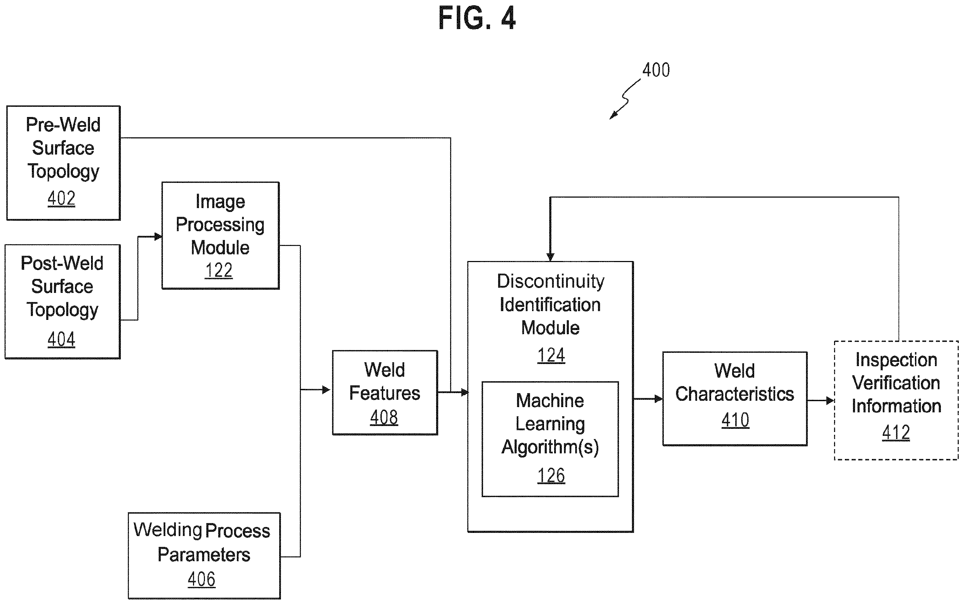

In some approaches, the machine learning algorithm 126 is also configured to assign at least one weld classifier based on the weld features and/or discontinuities. For example, the classifier may label or otherwise classify the weld 104 as conforming or not conforming to indicate that the weld 104 achieves a desired level of quality. In some approaches, the weld classifier may identify whether the weld 104 conforms with various weld standards. As used herein weld standards refer to any code, standard, or specification related to the characteristics, quality control requirements, or acceptance criteria for a weld. Weld standards may specify a width, height, or other dimensions for a weld. Weld standards may also specify whether discontinuities such as cracks, lack of penetration, inclusions, or lack of fusion are permissible in the weld 104. For example, if the weld standard indicates no discontinuities may be present in a weld and the machine learning algorithm 126 identifies a discontinuity, the weld would be labeled as non-conforming. The machine learning algorithm 126 may receive at least one weld feature or other input data such as pre-weld inspection data as input and may identify a characteristic of the weld 104 and/or assign a weld classifier as output. FIG. 3 illustrates how the machine learning algorithm 126 is trained, and FIG. 4 illustrates how the machine learning algorithm 126 is used to analyze one or more welds 104.

The databases 128 may store any form of data used, received, collected and/or generated by the system 100. In some approaches, the databases 128 may store welding process parameters collected by the welding device 107 and/or surface topology data collected by the inspection device 106. In some approaches, the database 128 may also store data that is used and/or generated by the image processing module 122, the feature engineering module 123, and/or the discontinuity identification module 124. In some approaches, the databases 128 may include time history data of the welding process parameters. In the databases 128, the welding process parameters may further be associated with positional data associated with the weld 104, such as the X-Y-Z location of the welding device 107 (*e.g.*, the welding gun) during the welding process. For example, in some embodiments, the inspection device 106 may follow the X-Y-Z path of the welding device 107 during the welding process, as a follower device, or as an independent device after the weld 104 has been completed. Accordingly, one or more of positional data and/or time history data may be stored in the databases 128 and, in some aspects, may be associated with the surface topology data and/or welding process parameters.

As illustrated in FIG. 1, the various elements of the system 100 may communicate directly or indirectly, such as over one or more distributed communication networks, such as network 130. For example, the network 130 may include LAN, WAN, Internet, cellular, Wi-Fi, and other such communication networks or combinations of two or more such networks.

In operation, the inspection device 106 acquires surface topology data associated with one or more welds 104. It is contemplated that the inspection device 106 need not capture surface topology data for the weld 104 along its entire length but may also capture surface topology for a portion thereof. It is further contemplated that the inspection device 106 may capture data for the weld metal zone and/or the heat-affect zone associated with the weld 104.

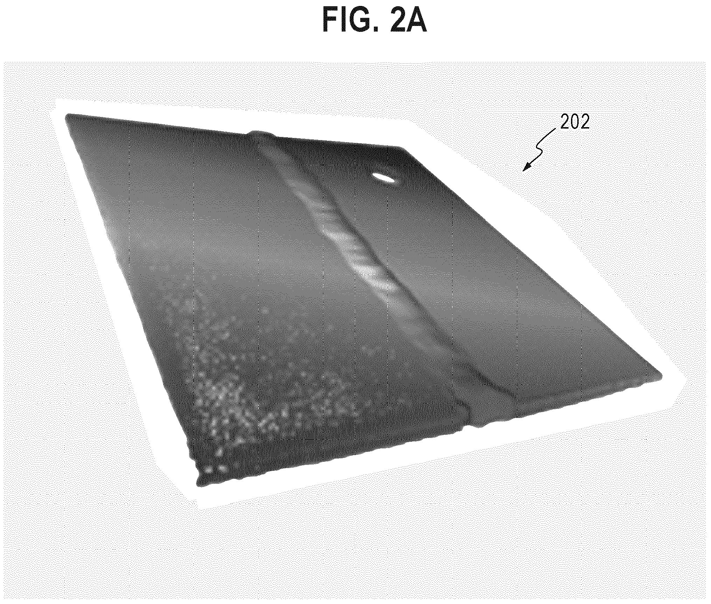

The image processing module 122 may receive the surface topology data, either directly or indirectly, from the inspection device 106. The image processing module 122 then processes the surface topology data to generate a weld section for the weld 104. From the weld section, the feature engineering module 123 extracts one or more weld features associated with the weld 104. FIGS. 2A-2E illustrate exemplary surface topology data, a weld section, and various weld features. The discontinuity identification module 124 then receives the weld feature associated with the weld 104. The discontinuity identification module 124 may analyze the weld feature to identify one or more discontinuities associated with the weld 104. The discontinuity identification module 124 may further analyze the weld feature to assign one or more weld classifiers to the weld 104.

FIG. 2A is an image of three-dimensional surface topology data 202 for an exemplary weld. The three-dimensional surface topology data 202 is in the form of point cloud data. The three-dimensional surface topology data 202 may be obtained via the inspection device 106, for example, a blue light scanner. Further, the three-dimensional surface topology data 202 data may be received by the image processing module 122 of the system 100 described with reference to FIG. 1.

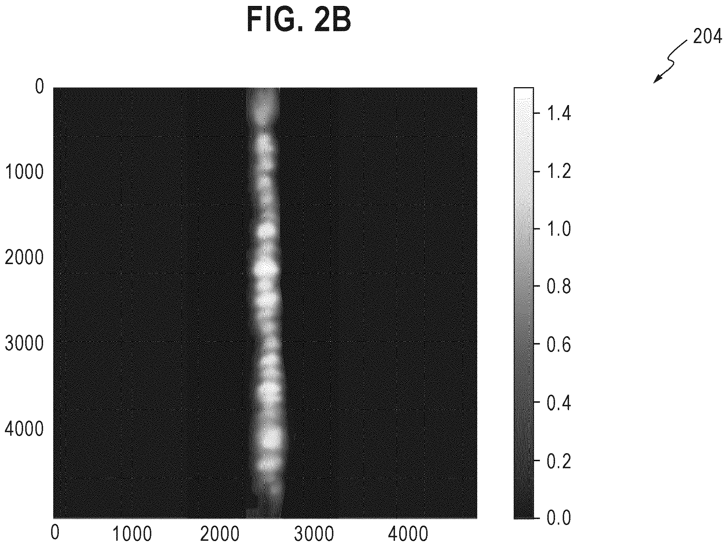

FIG. 2B is an image of a weld section 204 for an exemplary weld. A weld section 204 may be obtained via the image processing module 122. The image processing module 122 may generate the weld section 204 based on surface topology data, such as the three-dimensional surface topology data 202 depicted in FIG. 2A. For example, the image processing module 122 may extract the weld section 204 from point cloud data of the type illustrated in FIG. 2A. The weld section 204 captures the area on the face side of exemplary weld that identifies the weld region from adjacent plates of base material. The weld section 204 depicts the area where weld characteristics, such as discontinuities, may be present.

FIGS. 2C and 2B provide graphs of weld features associated with exemplary welds. FIG. 2C is a graph 206 of statistical weld features associated with an exemplary weld. The statical weld features include minimum height 207, maximum height 209, and average height 211. The statistical weld features may be derived from a weld section, such as the weld section 204 depicted in FIG. 2B. The statistical weld features shown in FIG. 2C may be used to identify a weld as conforming or non-conforming. For example, the area 208 is an area along the length of the weld where there is a larger variance in maximum height. The area 210 is an area along the length of the weld having a lower average height. Thus, the maximum height 207 and average height 211 weld features in FIG. 2C may be used to identify or label the exemplary weld as non-conforming. In one example, discontinuity identification module 124 may receive the statistical weld feature data shown in the graph 206 as input and identify or predict that the exemplary weld is non-conforming based on such statistical weld feature data. In another example, the statistical weld feature data from graph 206 may be labeled based on a volumetric inspection of the exemplary weld. If volumetric inspection confirms that the exemplary weld is non-conforming or has a defect, the volumetric weld feature data may be labeled as such and used to train the machine learning algorithm of the discontinuity identification module 124.

FIG. 2D is a graph 212 of another weld feature associated with exemplary welds. In particular, graph 212 illustrates the weld profile for a tall weld 214 and a short weld 216. The profile of the tall weld 214 has a larger height, which may be indicative of more weld material or a better quality weld. The profile of the short weld 216 has a lesser height, which may be indicative of less weld material or a lower quality weld. Accordingly, the weld feature in FIG. 2D may be used to identify or label the tall weld as conforming and to identify or label the short weld as non-conforming. In one example, the discontinuity identification module 124 may receive the weld feature data from graph 212 as input and identify or predict that the tall weld is conforming and that the short weld is non-conforming based on such weld feature data. In another example, the weld feature data from graph 212 may be labeled based on a volumetric inspection of the short weld and the tall weld. If volumetric inspection confirms that the short weld is non-conforming and the tall weld is conforming, the weld feature data may be labeled as such and used to train the machine learning algorithm of the discontinuity identification module 124.

FIG. 2E provides various histograms for exemplary welds. The histograms are derived from the weld sections for the exemplary welds and illustrates bins for height on the x-axis and a count of points from the point could data in each bin on the y-axis. The profiles of the histograms may correspond to various discontinuities. In this manner, the profiles of the histograms may be employed to identify or predict discontinuities associated with a weld and, in this manner, may be used to predict whether a weld is conforming or non-conforming.

FIG. 3 provides an exemplary system architecture that may be employed to train the discontinuity identification module 124 in the system 100, according to some embodiments. FIG. 3 illustrates one approach for training the machine learning algorithm 126 of the discontinuity identification module 124 using historic pre-weld surface topology data 302, historic post-weld surface topology data 304, and historic welding process parameters 308. It is contemplated that other training approaches may be employed.

As shown in FIG. 3, training data may be compiled in a training database 316 to train the machine learning algorithm 126. The training database 316 may include labeled weld feature data 318. In addition, the training database 316 may include other forms of data such as historic pre-weld surface topology data 302, historic post-weld surface topology data 304, historic welding process parameters 308, historic weld features 310, historic surface inspection data 312, or historic volumetric inspection data which may be received from any suitable data source. One or more types of data housed in the training database 316 may be used to train the machine learning algorithm 126 of the discontinuity identification module 124.

In some approaches, the image processing module 122 of the system 100 may analyze historic post-weld surface topology data 304 to generate or identify historic weld features 310. The image processing module 122, receives historic pre-weld surface topology data 302 and/or historic post-weld surface topology data 304 for a plurality of historic welds. In some approaches, the system 100 may store the historic pre-weld surface topology data 302 and/or the historic post-weld surface topology data 304 in one or more of the databases 128. However, it is also contemplated that the historic pre-weld surface topology data 302 and/or the historic post-weld surface topology data 304 may be received from other sources. The image processing module 122 receives the historic pre-weld surface topology data 302 and/or the historic post-weld surface topology data 304 and generates historic weld sections for the historic welds. The system also receives historic welding process parameters 308 for the historic welds. In some approaches, the system 100 may store the historic welding process parameters 308 in one or more of the databases 128, however, it is also contemplated that the historic welding process parameters 308 may be received from other sources. In some approaches, the feature engineering module 123 may extract historic weld features 310 for the historic welds based on the historic weld sections and the historic welding process parameters 308. The historic weld features 310 may be received by the training database 316. In other approaches, the training database 316 may receive the historic weld features 310 from other input sources such as databases.

The training database 316, which may be associated with the defect identification module 124 of the system 100, also receives historic surface inspection data 312 and/or historic volumetric inspection data 314 for the historic welds. In some approaches, the system 100 receives the historic surface inspection data 312 and/or the historic volumetric inspection data 314 from one or more of the databases 128. However, it is contemplated that the historic surface inspection data 312 and/or the historic volumetric inspection data 314 may be received from other sources. The historic surface inspection data 312 includes data obtained from surface inspection, such as a visual inspection, of the historic welds and identifies characteristics such as surface discontinuities for the historic welds. The historic surface inspection data 312 may also identify the historic welds as conforming or not conforming with one or more weld standards. The historic volumetric inspection data 314 includes data obtained from volumetric inspection, such as x-ray or ultrasound inspection, of the historic welds and identifies characteristics such as subsurface discontinuities for the historic welds. The historic volumetric inspection data 314 may also identify the historic welds as conforming or not conforming with one or more weld standards.

The historic weld features 310, the historic surface inspection data 312, and the historic volumetric inspection data 314 are used to generate labeled weld feature data 318. The labeled weld feature data 318 may by housed, for example, in a training database 316 for the discontinuity identification module 124. The labeled weld feature data 318 identifies weld characteristics associated with the historic weld features 310 for the plurality of welds 104. That is, the labeled weld feature data 318 labels the historic weld features 310 for the historic welds with one or more weld characteristics. The weld characteristics may identify the historic welds as conforming or non-conforming with respect to one or more weld standards or may identify one or more discontinuities, such as surface discontinuities or subsurface discontinuities associated with the historic welds. For example, a weld feature that indicates the minimum height of one of the historic welds may be labeled with a discontinuity or as non-conforming when the minimum height does not comply with a weld standard. In some approaches, the labeled weld feature data 318 is stored in a training database 316. The labeled weld feature data 318, the historic welding process parameters 308, and/or the historic volumetric inspection data 314 may be used as a training data set for the machine learning algorithm 126 in the discontinuity identification module 124. In this manner, the machine learning algorithm 126 may be trained to identify relationships between historic weld features 310 and historic weld characteristics.

In some embodiments, the historic pre-weld surface topology data 302, the historic post-weld surface topology data 304, and/or the historic welding process parameters 308 are used to generate additional labeled training data for the machine learning algorithm 126. The historic surface inspection data 312 and/or the historic volumetric inspection data 314 are used to generate such labeled training data. For example, historic surface inspection data 312 may be used to label the historic pre-weld surface topology data 302 with a particular defect or as conforming. Thus, the labeled training data identifies historic weld characteristics (such as defects, discontinuities, conforming, non-conforming etc.) associated with the historic pre-weld surface topology data 302, the historic post-weld surface topology data 304, and/or the historic welding process parameters 308. In this manner, the machine learning algorithm 126 may be trained to identify relationships between the historic pre-weld surface topology data 302 and historic weld characteristics. Further, the machine learning algorithm 126 may be trained to identify relationships between historic post-weld surface topology data 304 and historic weld characteristics. In addition, the machine learning algorithm 126 may be trained to identify relationships between historic welding process parameters 308 and historic weld characteristics

In some embodiments, the discontinuity identification module 124 may generate one or more weld signatures that are used to classify the welds 104. For example, the discontinuity identification module 124 may generate conforming weld signatures 324 that identify weld characteristics for welds 104 that conform to one or more weld standards and non-conforming weld signatures 326 that identify characteristics for welds 104 that do not conform to one or more weld standards. The conforming weld signatures 324 may include characteristics such as the various topology features (e.g., weld profile, weld shape, maximum weld height, minimum weld height, weld length, or other dimension of the weld or cross-section of the weld) or statistical features (e.g., average height of the weld, variance in the maximum height of the weld, variance in the minimum height of the weld) associated with conforming welds. The conforming weld signatures 324 may also include one or more models of a conforming weld (e.g., point cloud, two-dimensional images, weld sections, or histograms). FIGS. 2A to 2E provide examples of information that may be included in or associated with the conforming weld signatures 324. The conforming weld signatures 324 and the non-conforming weld signatures 326 may be stored in a weld classification database 322.

FIG. 4 provides an exemplary system architecture that may be employed to analyze one or more welds 104 using the discontinuity identification module 124, according to some embodiments.

The system 100 receives pre-weld surface topology data 402 and post-weld surface topology data 404 for the weld 104. In some approaches, the image processing module 122 receives the pre-weld surface topology data 402 and/or the post-weld surface topology data 404 and generates a weld section for the weld 104. The system 100 also receives one or more welding process parameters 406 associated with the weld 104. The feature engineering module 123 extracts one or more weld features 408 of the weld 104 based on the weld sections and the welding process parameters 406 for the weld 104.

The discontinuity identification module 124 then identifies one or more weld characteristics 410 associated with the weld 104 based on the weld features 408. The machine learning algorithm 126 identifies the weld characteristics 410 associated with the weld 104 based on the weld features 408. In some approaches, the machine learning algorithm 126 has been trained using the system architecture described with reference FIG. 3.

In some embodiments, the discontinuity identification module 124 may identify one or more weld characteristics 410 associated with the weld 104 based on the pre-weld surface topology data 402, the post-weld surface topology data 404, and/or the welding process parameters 406. The machine learning algorithm 126 may be trained to identify weld characteristics 410 associated with the weld 104 based on the pre-weld surface topology data 402, the post-weld surface topology data 404, and/or the welding process parameters 406.

As discussed above, the weld characteristics 410 may include an indication of whether the weld 104 conforms to a weld standard. Accordingly, in some embodiments, the discontinuity identification module 124 may identify whether the weld 104 conforms to one or more weld standards (e.g., whether the weld 104 is conforming or non-conforming). In some approaches, the discontinuity identification module 124 may determine that the weld 104 is conforming, at least in part, based on whether the welding process parameters 406 are out of range. That is, the machine learning algorithm 126 may learn when the welding process parameters 406 are out of range and create and/or identify a non-conforming characteristic for the weld 104, precluding the need to inspect or analyze the weld 104.

The system may further receive inspection verification information 412 for the weld characteristics 410 associated with the weld 104. In some approaches, inspection verification information 412 may include information acquired from an inspection of the weld 104 via one or more inspection methods such as surface inspection or volumetric inspection. In some embodiments, the inspection verification information 412 may also include metallography data, which may provide a cross-section of the weld 104. In this manner, the inspection verification information 412 may confirm the accuracy of the weld characteristics 410 identified using the discontinuity identification module 124 and or one or more weld classifiers assigned via the discontinuity identification module 124. For example, metallography data may be used to validate or confirm the accuracy of weld characteristics 410 such as a lack of fusion or a lack of penetration. The inspection verification information 412 may also be received by the discontinuity identification module 124, for example, to update a training data set that is used to update and/or train the machine learning algorithm 126.

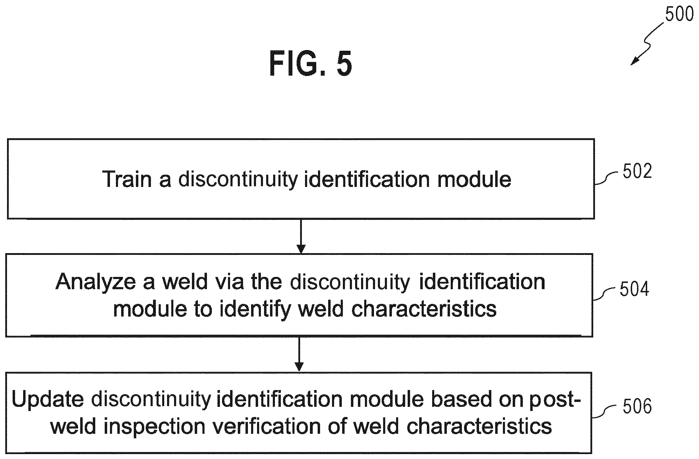

FIG. 5 provides a high-level overview of a method 500 of analyzing weld quality. The method 500 or portions thereof may be executed using the system 100 and, in some approaches, the system architecture 300 of FIG. 3 and/or the system architecture 400 of FIG. 4.

The method 500 includes training 502 the discontinuity identification module 124 to identify the weld characteristics 410 associated with the weld 104 based on the weld features 408 of the weld 104. In some approaches, the system architecture 300400 shown in FIG. 3 may be used to train the discontinuity identification module 124. The method 500 also includes analyzing 504 the weld 104 via the discontinuity identification module 124 to identify the weld characteristics 410 associated with the weld 104. In some embodiments, the method 500 further includes updating 506 the discontinuity identification module 124 based on a post-weld inspection verification of the weld characteristics 410 associated with the weld 104. In some approaches, post-weld inspection verification involves inspecting the weld 104 to obtain inspection verification information 412. The weld 104 may be inspected via one or more inspection methods such as surface inspection or volumetric inspection methods to confirm the accuracy of the weld characteristics 410 identified using the discontinuity identification module 124. To verify the accuracy of the weld characteristics 410 after the weld 104 is completed, the inspection verification information 412 *(i.e.,* obtained from visual or volumetric inspection of the weld 104) may be compared to the weld characteristics 410 identified using the discontinuity identification module 124.

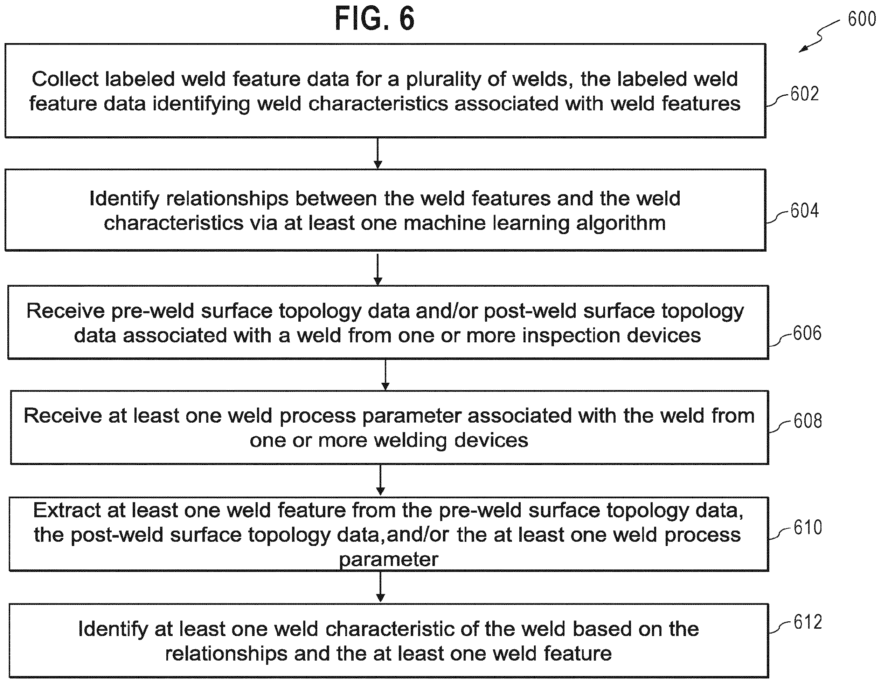

Turning to FIG. 6, a method 600 of analyzing weld quality is illustrated. The method 600 or portions thereof may be executed using the system 100, and, in some approaches, the system architecture 300 of FIG. 3 and/or the system architecture 400 of FIG. 4. In some approaches, the method 600 may be employed to train the machine learning algorithm 126 and generate a trained machine learning algorithm. Further, the method 600 may be used to identify one or more weld characteristics 410 associated with the weld 104 using the machine learning algorithm 126.

The method 600 includes collecting 602 labeled weld feature data 318 for a plurality of historic welds with known historic weld characteristics (e.g., known discontinuities) and historic weld features 310. The labeled weld feature data 318 identifies historic weld characteristics associated with the historic weld features 310 of the plurality of historic welds. The historic weld characteristics may include, for example, weld discontinuities or indications as to whether the historic welds conform to weld standards. The method 600 also includes identifying 604 relationships between the historic weld features 310 and the historic weld characteristics via at least one machine learning algorithm 126 using the labeled weld feature data 318. In some approaches, the machine learning algorithm is part of the discontinuity identification module 124.

The method 600 further includes at 606 receiving pre-weld surface topology data 402 and/or post-weld surface topology data 404 associated with a weld 104 directly or indirectly from one or more inspection devices 106. The receiving at 606, may include receiving pre-weld surface topology data 402 and/or post-weld surface topology data 404 for the length of the weld 104; however, it is also contemplated that the surface topology data may only be for a portion of the length of the weld 104. In some approaches, the receiving at 606, includes receiving pre-weld surface topology data 402 and/or post-weld surface topology data 404 for the weld metal zone (WMZ) and/or the heat-affected zone (HAZ). That is, the receiving at 606, may include receiving pre-weld surface topology data 402 and/or post-weld surface topology data 404 for both the weld 104 and its heat-affected zone. It is also to be understood that the receiving at 606, may include receiving pre-weld surface topology data 402 and/or post-weld surface topology data 404 for the root side and/or the face side of the weld 104.

The method 600 also includes receiving 608 at least one welding process parameter 406 associated with the weld 104 directly or indirectly from one or more welding devices 107. In some approaches, it is also contemplated that the welding process parameter 406 may be input into the machine learning algorithm 126 employed in the method 600 or may be collected via cameras, pyrometers, positioning devices (e.g., servo encoders), or gas flow monitors associated with a welding operation. The method 600 also includes extracting 610 at least one weld feature 408 from the pre-weld surface topology data 402, the post-weld surface topology data 404, and/or the welding process parameter 406. In some approaches, the extracting at 610 is performed via the feature engineering module 123 described with reference to FIG. 1.

The method 600 also includes identifying 612 at least one weld characteristic 410 of the weld 104 based on the weld features 408 and the relationships between the historic weld features 310 and the historic weld characteristics. In some approaches, the identifying at 612 may be performed via the discontinuity identification module 124 described with reference to FIGS. 1-3. The machine learning algorithm 126 receives the weld feature 408 weld as input and identifies the weld characteristics 410 associated with the weld 104 as output.

In some embodiments, the method 600 may also label the weld 104 based on the weld characteristics 410. In particular, the method 600 may include generating a plurality of weld classifiers based on the relationships between the historic weld features 310 and the historic weld characteristics. The weld classifiers may label or otherwise classify the weld 104 based on its weld characteristics 410. For example, the weld classifier may label the weld as conforming or non-conforming with one or more weld standards. The weld standards may include inspection standards or specifications for the weld 104. The method 600 may also further include assigning at least one weld classifier of the plurality of weld classifiers to the weld 104. The at least one weld classifier may be assigned based on weld feature 408 and the relationships between the historic weld features 310 and the historic weld characteristics. It is contemplated that the weld classifiers may be output in a weld classification report or may be displayed to an operator via one or more user interfaces.

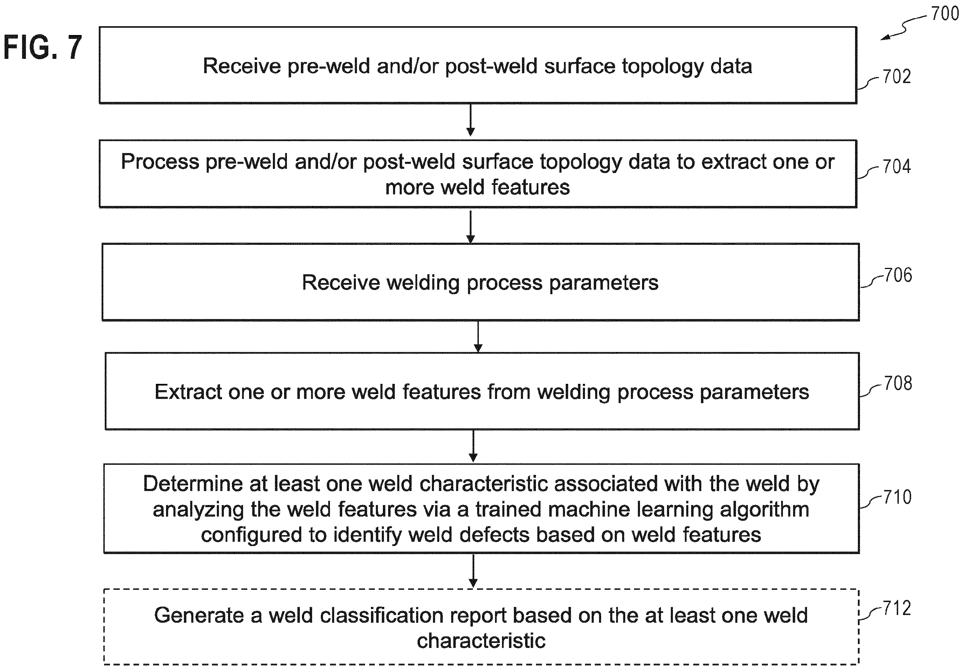

Turning to FIG. 7, a method 700 of analyzing weld quality is illustrated. The method 700 may be employed to identify one or more weld characteristics 410 associated with a weld 104. The method 700 or portions thereof may be executed using the system 100 and, in some approaches, the system architecture 300400 of FIG. 3 and/or the system architecture 400 of FIG. 4.

The method 700 includes receiving 702 pre-weld surface topology data 402 and/or post-weld surface topology data 404 associated with the weld 104. The pre-weld surface topology data 402 and/or the post-weld surface topology data 404 may be received directly or indirectly from one or more inspection devices 106. The receiving at 702 may include receiving pre-weld surface topology data 402 and/or post-weld surface topology data 404 for the length of the weld 104; however, it is also contemplated that the surface topology data may only be for a portion of the length of the weld 104. In some approaches, the receiving at 702 includes receiving pre-weld surface topology data 402 and/or post-weld surface topology data 404 for the weld metal zone (WMZ) and/or the heat-affected zone (HAZ). That is, the receiving at 702 may include receiving pre-weld surface topology data 402 and/or post-weld surface topology data 404 for the weld 104 and its heat-affected zone and/or weld metal zone. It is also to be understood that the receiving at 702 may include receiving pre-weld surface topology data 402 and/or post-weld surface topology data 404 for the root side and/or the face side of the weld 104.

The method 700 also includes processing 704 the pre-weld surface topology data 402 and/or the post-weld surface topology data 404 to extract one or more weld features 408. In some approaches, the processing at 704 the pre-weld surface topology data 402 and/or the post-weld surface topology data 404 to extract weld features 408 is performed via the feature engineering module 123.

The method 700 further includes receiving 706 one or more welding process parameters 406. In some approaches, the welding process parameters 406 may be received from one or more welding devices 107, for example, via one or more sensors built into or externally applied to the welding device 107. In other approaches, the welding process parameters 406 may be input into the machine learning algorithm 126 employed in the method 700 or may be collected via devices such as cameras, pyrometers, positioning devices (e.g., servo encoders), or gas flow monitors associated with the welding operation. The method 700 also includes extracting 708 one or more weld features 408 from the welding process parameters 406. In some approaches, the extracting 708 one or more weld features 408 from the welding process parameters 406 is performed via the feature engineering module 123.

The method 700 also includes determining 710 one or more weld characteristics associated with the weld 104 by analyzing the weld features 408 via a trained machine learning algorithm. The trained machine learning algorithm may be configured to identify the weld characteristics based on the weld features 408. The trained machine learning algorithm receives the weld features 408 associated with the weld as input and identifies the weld characteristics 410 associated with the weld 104 as output. In some approaches, the trained machine learning algorithm is generated as described in FIG. 3.

In some embodiments, the method 700 further includes generating 712 a weld classification report based on the weld characteristics 410. The weld classification report may provide information on the weld characteristics 410 identified via the method 700. The weld classification report may further include any additional information relating to the quality of the weld 104. In one example, the weld classification report may provide information on a discontinuity such as a description of the discontinuity, a location of the discontinuity on the weld 104, and/or welding process parameters 406 associated with the discontinuity. In some approaches, the weld classification report may identify a low, medium, or high classification for the weld 104, the classification indicating a level of compliance with one or more weld standards. It is also contemplated that the weld classification report may provide one or more labels for the weld 104 that label or otherwise classify the weld 104 based on its weld characteristics 410.

The weld classification report may also include one or more recommendations related to the weld 104. The recommendations may provide one or more corrective measures for the weld 104 that was analyzed via the method 700. In some aspects, the weld classification report may also provide one or more corrective measures for future welds. The corrective measures may indicate conditions that optimize the welding process parameters 406 or the welding process parameters 406 that may result in a greater compliance or a reduced number of discontinuities. In one example, the recommendation may indicate that the weld 104 should be re-welded.

Conventional methods of analyzing weld quality may be dependent on volumetric inspection, such as x-ray or ultrasound inspection, after welding is complete to determine whether subsurface defects are present in a weld. Further, visual inspection, for example using a borescope, may be required to assess whether surface defects are present in a weld. Aspects of the present disclosure may allow for such volumetric or visual inspections to be eliminated or reduced and, accordingly, post-weld inspection processes may be eliminated from a shop floor. Further, eliminating volumetric and/or visual post-weld inspection processes may eliminate or reduce the subjectivity associate with interpreting inspection results to identify conforming versus non-conforming defects.

In particular, the methods and system described herein use post-welding surface topology information in combination with welding process parameters to identify surface defects and/or to predict when subsurface defects are present in a weld by using machine learning and artificial intelligence algorithms. Such algorithms may be employed to improve the quality control and quality assurance for a welding process. Using post-weld surface topology data and welding process parameters collected during welding, a training set may be created and labeled with data from post-weld inspections defining conforming and non-conforming welds or parts. The training data is then used to build machine learning algorithms that are able to predict further outcomes of surface and/or subsurface defects for welds. Further still, the machine learning algorithms may be continuously updated with new annotated data to improve its accuracy.

In addition, the methods and system described in the present disclosure may allow for the optimization of the welding process and a reduction in defects in welds. For example, the machine learning algorithm may be used to optimize welding process parameters which may, in turn, reduce result weld defects and increase conformance of parts. Such a reduction in defects or increase in conformance may result in scrap reduction.

It is also contemplated that, by employ surface topology data, the methods and systems described herein may provide robust defect identification or prediction. Surface topology data covers many defect types, such as undercut, excessive weld material, or lower weld. Accordingly, by using surface topology data in a machine learning algorithm may provide comprehensive defect identification or prediction.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Further aspects of the invention are provided by the subject matter of the following clauses:

A system for analyzing weld quality, the system comprising a controller having at least one processor and at least one memory device, the at least one memory device storing at least one machine learning algorithm configured to receive surface topology data and welding process parameters and process the surface topology data and welding process parameters to identify a weld characteristic from a plurality of pre-defined weld characteristics, and storing instructions that when executed by the at least one processor causes the at least one processor to perform operations, the at least one processor configured to: receive labeled weld feature data for a first plurality of historic welds having a plurality of historic weld features, the labeled weld feature data identifying historic weld characteristics associated with the plurality of historic weld features; determine relationships between the plurality of historic weld features and the historic weld characteristics via at least one machine learning algorithm; receive post-weld surface topology data associated with a weld from one or more inspection devices; receive at least one welding process parameter associated with the weld; extract at least one weld feature from at least one of the post-weld surface topology data or the at least one welding process parameter; and identify, via the controller, at least one weld characteristic of the weld from the plurality of pre-defined weld characteristics based on the relationships between the plurality of historic weld features and the historic weld characteristics and the at least one weld feature.

The system of any preceding clause, wherein the at least one weld characteristic includes at least one of a surface discontinuity or a subsurface discontinuity.

The system of any preceding clause, wherein the at least one processor is further configured to: generate a plurality of weld classifiers; and assign, via the controller, at least one weld classifier of the plurality of weld classifiers to the weld based on the at least one weld feature and the relationships between the plurality of historic weld features and the historic weld characteristics.

The system of any preceding clause, wherein the at least one processor is further configured to generate a weld classification report based on the at least one weld characteristic.

The system of any preceding clause, wherein the at least one processor is further configured to process the post-weld surface topology data to extract the at least one weld feature.

The system of any preceding clause, wherein the at least one weld feature includes at least one of a shape, a dimension, a shape of a weld profile, a dimension of the weld profile, or a statistical feature of the weld.

The system of any preceding clause, further comprising a laser scanner and wherein the laser scanner forms the one or more inspection devices.

The system of any preceding clause, wherein the at least one processor is further configured to generate a weld section from the post-weld surface topology data.

The system of any preceding clause, wherein the processor is further configured to: receive labeled pre-weld surface topology data for a second plurality of historic welds, the labeled pre-weld surface topology data for the second plurality of historic welds identifying historic weld characteristics associated with historic pre-weld surface topology data; determine relationships between the historic pre-weld surface topology data and the historic weld characteristics via at least one machine learning algorithm; receive pre-weld surface topology data associated with the weld; and identify, via the controller, at least one weld characteristic of the weld based on the relationships between the historic pre-weld surface topology data and the historic weld characteristics and the pre-weld surface topology data.

The system of any preceding clause, wherein the pre-weld surface topology data and the post-weld surface topology data are point cloud data.

The system of any preceding clause, wherein the at least one processor is further configured to: transform the point cloud data to image data; obtain an intensity of the image data; generate a weld section for the weld based on the intensity of the image data; and extract the at least one weld feature based on the weld section.

A method of analyzing weld quality, the method comprising: collecting labeled weld feature data for a plurality of historic welds having a plurality of historic weld features, the labeled weld feature data identifying historic weld characteristics associated with the plurality of historic weld features; identifying relationships between the plurality of historic weld features and the historic weld characteristics via at least one machine learning algorithm to generate a plurality of weld classifiers; receiving pre-weld surface topology data and post-weld surface topology data associated with a weld from one or more inspection devices; receiving at least one welding process parameter associated with the weld from one or more welding devices; extracting at least one weld feature from the pre-weld surface topology data, the post-weld surface topology data, and the at least one welding process parameter; and assigning, via a controller, at least one weld classifier of the plurality of weld classifiers to weld based on the at least one weld feature and the relationships between the plurality of historic weld features and the historic weld characteristics.

The method of any preceding clause, wherein the weld classifier identifies the weld as conforming or non-conforming.

The method of any preceding clause, wherein the method further comprises: receiving inspection verification information, the inspection verification information including at least one of visual inspection or volumetric inspection results for the weld; and comparing the inspection verification information to the at least one weld classifier.

The method of any preceding clause, wherein the method further comprises: updating the at least one machine learning algorithm based the comparing of the inspection verification information to the at least one weld classifier.

The method of any preceding clause, wherein updating the at least one machine learning algorithm includes adding the inspection verification information to a training data set for the at least one machine learning algorithm.

A method of analyzing weld quality, the method comprising: receiving pre-weld surface topology data and post-weld surface topology data associated with a weld from one or more inspection devices; receiving at least one welding process parameter associated with the weld from one or more welding devices; extracting at least one weld feature from the pre-weld surface topology data, the post-weld surface topology data, and the at least one welding process parameter; and determining at least one weld characteristic associated with the weld by analyzing the at least one weld feature via a trained machine learning algorithm configured to identify weld characteristics based on weld features, the trained machine learning algorithm receiving the at least one weld feature as input and identifying the at least one weld characteristic associated with the weld as output.

The method of any preceding clause, further comprising: assigning at least one weld classifier to the weld based on the at least one weld characteristic.

The method of any preceding clause, wherein the at least one weld classifier identifies whether the weld conforms to at least one predetermined weld standard.

The method of any preceding clause, further comprising: receiving inspection verification information, the inspection verification information including at least one of visual inspection or volumetric inspection results for the weld; comparing the inspection verification information to the at least one weld classifier; and updating the trained machine learning algorithm based on the comparing of the inspection verification information to the at least one weld classifier.

The method of any preceding clause, wherein updating the trained machine learning algorithm includes adding the inspection verification information to a training data set for the trained machine learning algorithm.

The method of any preceding clause, wherein a training data set used to train the trained machine learning algorithm comprises historic weld features of welds with known characteristics.

The method of any preceding clause, wherein the historic weld features are determined based on historic pre-weld surface topology data and historic post-weld surface topology data, wherein the historic pre-weld surface topology data and the historic post-weld surface topology data are associated with the welds with known characteristics.

A method for analyzing weld quality, comprising: receiving information related to a plurality of historic welds including historic labeled weld feature data and historic weld characteristics; receiving post-weld surface topology data from one or more inspection devices, defining received surface topology information; receiving at least one welding process parameter associated with a weld of a component; determining correlations between the historic labeled weld feature data and historic weld characteristics via at least one machine learning algorithm; predicting, via a controller, at least one subsurface defect of the component based on the determined correlations, at least one welding process parameter, and the received surface topology information.

The method of any preceding clause, further comprising: assigning, via the controller, at least one weld classifier to the weld based on the at least one subsurface defect, and wherein the at least one weld classifier identifies the weld as conforming or non-conforming.

The method of any preceding clause, wherein the component is an additively manufactured component, and wherein the weld is an overlapping seam.

The method of any preceding clause, further comprising: receiving inspection verification information, the inspection verification information including at least one of visual inspection or volumetric inspection results for the weld; comparing the inspection verification information to the at least one weld classifier; and updating the at least one machine learning algorithm based on the comparing of the inspection verification information (412) to the at least one weld classifier.

It will be understood that various changes in the details, materials, and arrangements of parts and components which have been herein described and illustrated to explain the nature of the dynamic seals between moving components and stationary components may be made by those skilled in the art within the principle and scope of the appended claims. Furthermore, while various features have been described with regard to particular embodiments, it will be appreciated that features described for one embodiment also may be incorporated with the other described embodiments.

## Claims

1. A system (100) for analyzing weld quality, the system (100) comprising a controller (108) having at least one processor (110) and at least one memory device (116), the at least one memory device (116) storing at least one machine learning algorithm (126) configured to receive surface topology data and welding process parameters and process the surface topology data and welding process parameters to identify a weld characteristic from a plurality of pre-defined weld characteristics, and storing instructions that when executed by the at least one processor (110) causes the at least one processor (110) to perform operations, the at least one processor (110) configured to:
receive labeled weld feature data (318) for a first plurality of historic welds having a plurality of historic weld features (310), the labeled weld feature data (318) identifying historic weld characteristics associated with the plurality of historic weld features (310);
determine relationships between the plurality of historic weld features (310) and the historic weld characteristics via the at least one machine learning algorithm (126);
receive post-weld surface topology data (404) associated with a weld (104) from one or more inspection devices (106);
receive at least one welding process parameter (406) associated with the weld (104);
extract at least one weld feature (408) from at least one of the post-weld surface topology data (404) or the at least one welding process parameter (406); and
identify, via the controller, at least one weld characteristic (410) of the weld (104) from the plurality of pre-defined weld characteristics based on the relationships between the plurality of historic weld features (310) and the historic weld characteristics and the at least one weld feature (408).

2. The system (100) of claim 1, wherein the at least one weld characteristic (410) includes at least one of a surface discontinuity or a subsurface discontinuity.

3. The system (100) of any preceding claim, wherein the at least one processor (110) is further configured to:
generate a plurality of weld classifiers; and
assign, via the controller, at least one weld classifier of the plurality of weld classifiers to the weld (104) based on the at least one weld feature (408) and the relationships between the plurality of historic weld features (310) and the historic weld characteristics.

4. The system (100) of any preceding claim, wherein the at least one processor (110) is further configured to generate a weld classification report based on the at least one weld characteristic (410).

5. The system (100) of any preceding claim, wherein the at least one processor (110) is further configured to process the post-weld surface topology data (404) to extract the at least one weld feature (408).

6. The system (100) of any preceding claim, wherein the at least one weld feature (408) includes at least one of a shape, a dimension, a shape of a weld profile, a dimension of the weld profile, or a statistical feature of the weld (104).

7. The system (100) of any preceding claim, further comprising a laser scanner and wherein the laser scanner forms the one or more inspection devices (106).

8. The system (100) of any preceding claim, wherein the at least one processor (110) is further configured to generate a weld section from the post-weld surface topology data (404).

9. The system (100) of claim 8, wherein the post-weld surface topology data (404) is point cloud data.

10. The system (100) of claim 9, wherein the at least one processor (110) is further configured to:
transform the point cloud data to image data;
obtain an intensity of the image data;
generate the weld section for the weld (104) based on the intensity of the image data; and
extract the at least one weld feature (308) based on the weld section.

11. The system of any preceding claim, wherein the at least one processor (110) is further configured to:
receive labeled pre-weld surface topology data (402) for a second plurality of historic welds, the labeled pre-weld surface topology data for the second plurality of historic welds identifying historic weld characteristics associated with historic pre-weld surface topology data;
determine relationships between the historic pre-weld surface topology data (302) and the historic weld characteristics via at least one machine learning algorithm (126);
receive pre-weld surface topology data (402) associated with the weld (104); and
identify, via the controller, at least one weld characteristic (410) of the weld (104) based on the relationships between the historic pre-weld surface topology data and the historic weld characteristics and the pre-weld surface topology data (402).

12. A method for analyzing weld quality, comprising:
receiving information related to a plurality of historic welds including historic labeled weld feature data and historic weld characteristics;
receiving post-weld surface topology data (404) from one or more inspection devices (106), defining received surface topology information;
receiving at least one welding process parameter (406) associated with a weld (104) of a component (102);
determining correlations between the historic labeled weld feature data and historic weld characteristics via at least one machine learning algorithm (126);
predicting, via a controller, at least one subsurface defect of the component based on the determined correlations, at least one welding process parameter (406), and the received surface topology information.

13. The method of claim 12, further comprising assigning, via the controller, at least one weld classifier to the weld based on the at least one subsurface defect, and wherein the at least one weld classifier identifies the weld as conforming or non-conforming.

14. The method of claim 13, further comprising:
receiving inspection verification information (412), the inspection verification information (412) including at least one of visual inspection or volumetric inspection results for the weld;
comparing the inspection verification information (412) to the at least one weld classifier; and
updating the at least one machine learning algorithm (126) based on the comparing of the inspection verification information (412) to the at least one weld classifier.

15. The method of any of claims 12 to 14, wherein the component (102) is an additively manufactured
component, and wherein the weld (104) is an overlapping seam.
